Europäisches Patentamt

European Patent Office

Office européen des brevets

(11) Veröffentlichungsnummer: **0 591 828 A2**

# EUROPÄISCHE PATENTANMELDUNG

(21) Anmeldenummer: 93115703.6

(22) Anmeldetag: **29.09.93**

(51) Int. Cl.5: **C08L 59/04**, C08G 2/06, C08G 2/08, C08G 2/10

(30) Priorität: **03.10.92 DE 4233308**

(43) Veröffentlichungstag der Anmeldung:
**13.04.94 Patentblatt 94/15**

(84) Benannte Vertragsstaaten:
**AT BE CH DE DK ES FR GB IT LI LU NL SE**

(71) Anmelder: **HOECHST AKTIENGESELLSCHAFT
Brüningstrasse 50
D-65929 Frankfurt am Main(DE)**

(72) Erfinder: **Reuschel, Gerhard, Dr.
Am Steiner Kreuz 21
D-68647 Biblis(DE)**
Erfinder: **Fleischer, Dietrich, Dr.
Seitersweg 19
D-64287 Darmstadt(DE)**
Erfinder: **Yamamoto, Kaoru
3794-1, Imaizumi
Fuji-shi, Shizuoka(JP)**
Erfinder: **Chino, Shuichi
324, Miyashita
Fuji-shi, Shizuoka(JP)**

(54) **Polyacetal-Formmassen mit hoher Schlagzähigkeit, Verfahren zu ihrer Herstellung und ihre Verwendung.**

(57) Formmasse aus linearen Polyoxymethylencopolymeren und üblichen Zusatzstoffen, die einen Schmelzindex MFI bei 2,16 kg Auflagegewicht und 190°C Meßtemperatur von ≤0,8 g/10 min, bevorzugt ≤0,5 g/10 min und insbesondere ≤0,2 g/10 min aufweist, besitzt eine außergewöhnlich hohe Zähigkeit, die einen Zusatz von Elastomer-Modifikatioren unnötig macht. Bei ihrer Herstellung werden Lewis-Säuren oder Protonensäuren als Initiatoren eingesetzt.

Die vorliegende Erfindung betrifft Polyacetal-Formmassen mit hoher Zähigkeit, die ein besonders hohes Molekulargewicht aufweisen sowie Verfahren zu ihrer Herstellung und Verwendung.

Thermoplastische Formmassen aus Polyoxymethylenhomo- und copolymeren, im folgenden als "POM" bezeichnet, werden seit langem als vielseitige Werkstoffe vor allem im technischen Bereich häufig eingesetzt.

Sie eignen sich wegen ihrer hervorragenden mechanischen Eigenschaften, wie hoher Steifigkeit, Härte und Festigkeit sowie der Möglichkeit, Formteile und Formkörper in engen Toleranzgrenzen herzustellen, und der guten Beständigkeit gegenüber vielen Chemikalien vielfach als Metallersatz. Für eine Reihe von Anwendungen weisen sie allerdings eine zu geringe Schlagzähigkeit, insbesonderer eine zu geringe multiaxiale Schlagzähigkeit auf.

Die kommerziell erhältlichen Polyacetale decken einen breiten Bereich an Schmelzviskositäten für verschiedene Anwendungen ab. Im hochmolekularen Bereich stellen Produkte mit einem Schmelzindex $MFI_{190°C/2,16\ kg}$ von 2,5-1,0 g/10 min die Obergrenze für die Molmasse der Handelsprodukte dar. Typen mit niedrigerer Molmasse werden mit einem $MFI_{190°C/2,16\ kg}$ von bis zu 50 g/10 min angeboten. Beispiele hierfür sind in den Produktbroschüren der Polyacetal-Hersteller zu finden. Sie werden im allgemeinen nach bekannten Verfahren mit $BF_3$ oder $HClO_4$ als Initiatoren hergestellt, wobei die Menge der genannten Initiatoren ca. 150 ppm bzw. ca. 2 ppm beträgt.

Bei allen diesen Materialien findet man jedoch für die Schlagzähigkeit Werte, die für anspruchsvolle Anwendungen nicht ausreichen. Die Kerbschlagzähigkeit $a_k$ nach DIN 53453 liegt bei den handelsüblichen Produkten zwischen 4,0 und 6,5 mJ/mm$^2$. Ebenso ist beim Durchstoßtest nach DIN 53443 die Verformung mit 2,0 mm und die benötigte Schädigungsarbeit von etwa 2,0 J für manche Zwecke nicht ausreichend.

Man kann die Zähigkeit der Polyacetale durch Einarbeiten von vernetzten oder unvernetzten oder auch von gepfropften Elastomeren in die POM-Polymermatrix verbessern. Diese Modifizierung von POM ist bereits bekannt aus den folgenden europäischen Patentschriften EP 115846, EP 115847, EP 116456, EP 117664, EP 156285. Sie wird schon seit längerem für die Produktion von schlagzähmodifizierten Handelsprodukten eingesetzt. Damit wird zwar die Schlagzähigkeit von Formkörpern aus POM verbessert, aber es entstehen zusätzlich erhebliche Probleme bei der Herstellung und Verarbeitung dieser Polymermassen. Besonders die homogene Dispergierung der Fremdstoffe in der Polyacetal-Matrix verursacht große zusätzliche Aufwendungen bei der Produktion schlagzäh modifizierter Produkte. Die verwendeten Schlagzähmodifikatoren sind zudem häufig empfindlich gegen Lösemittel, Kraftstoffe oder andere Chemikalien. Dadurch ist der Einsatzbereich der modifizierten Polyacetale gegenüber den Polyacetalen ohne Schlagzähmodifikatoren eingeschränkt.

Es bestand daher die Aufgabe, die Schlagzähigkeit der Polyacetal-Formmassen zu verbessern, ohne die Nachteile - z.B. infolge einer Zumischung von Fremdstoffen - hinnehmen zu müssen. Weiterhin sollte die gute Chemikalienbeständigkeit der unmodifizierten Polyacetale erreicht werden. Gleichzeitig soll das Material mit den für POM üblichen Methoden wie Spritzguß oder Extrusion verarbeitbar sein.

Die Aufgabe wurde durch die vorliegende Erfindung gelöst.

In der DE-A 15 20 845 wird ein Verfahren zur Herstellung von Polyoxymethylenhomopolymeren mit ultrahohen Molmassen beschrieben, wobei die Polymerisation in der reinen Festphase des Trioxans abläuft. Dieses Verfahren ist jedoch nicht anwendbar auf die Herstellung von sehr hochmolekularen Acetalcopolymeren, weil die Gegenwart von Comonomeren die Bildung ausreichend reiner Kristalle ausschließt.

Die Erfindung betrifft Formmassen aus linearen Polyoxymethylen-Copolymeren mit verbesserten mechanischen Eigenschaften, dadurch gekennzeichnet, daß der Schmelzindex MFI bei 2,16 kg Auflagegewicht und 190°C Meßtemperatur ≦0,8 g/10 min, bevorzugt ≦0,5 g/10 min und insbesondere ≦0,2 g/10 min ist.

Polyoxymethylen-Copolymere dieser Art weisen eine sehr hoher Molmasse auf. So zeigen lineare POM-Copolymere mit einem $MFI_{190°C/2,16\ kg}$ < 0,8 g/10 min eine erhebliche Verbesserung in der Schlagzähigkeit gegenüber Produkten mit geringerer Molmasse. Noch besser sind Materialien mit einem $MFI_{190°/2,16\ kg}$ < 0,50 g/10 min. Am besten geeignet sind Materialien, bei denen der MFI unter 0,20 g/10 min liegt.

Die Werte für die reduzierte spezifische Viskosität (als RSV-Wert bezeichnet) des Polyoxymethylens betragen bei den Handelsprodukten im allgemeinen 0,2 bis 0,9 dl/g (gemessen in γ-Butyrolacton, stabilisiert mit 0,5 Gew.% Diphenylamin, bei 140°C in einer Konzentration von 0,5g/100 ml). Die erfindungsgemäßen Formmassen weisen dagegen RSV-Werte größer als 1,7 dl/g auf.

Bei der Messung der Eigenschaften nach DIN 53453 und DIN 53443 bei 23°C werden z.B. bei Kerbschlagzähigkeit $a_k$ mit mehr als 10 mJ/mm$^2$ die Werte von elastomermodifizierten Produkten erreicht oder teilweise sogar übertroffen. Ebenso zeigen die Werte beim Durchstoßtest für die Verformung mit über 6 mm und die der benötigten Schädigungsarbeit von mehr als 7 J an, wobei die Gesamtarbeit bei mehr als 11 J liegt, daß das Niveau der elastomermodifizierten Produkte ohne Zumischung von Fremdstoffen erreicht werden kann.

2

Bei der Reißdehnung konnte ebenfalls eine Verbesserung um 30% gegenüber den nichtmodifizierten handelsüblichen Polyoxymethylenen erreicht werden.

Damit ist es möglich, hochschlagzähe POM-Formmassen - ohne wesentliche Anteile an Fremdstoffen in Form von Schlagzähmodifikatoren - herzustellen.

Diese Materialien können auf den üblichen, kontinuierlich arbeitenden Produktionsmaschinen mit den bekannten Initiatoren und Comonomeren hergestellt werden. Dabei können als Comonomere cyclische Ether wie Ethylenoxid und/oder cyclische Acetale wie Dioxolan oder Butandiolformal Verwendung finden. Besonders vorteilhaft ist die Verwendung von Comonomeren, die in der Polymerkette zu einer $C_2$-Einheit führen. Am besten geeignet ist Dioxolan als Comonomeres. Der Anteil der Comonomeren am Reaktionsgemisch beträgt 0,1 bis 10 Mol%, vorzugsweise 1,0 bis 8 Mol% und insbesondere 2 bis 6 Mol%. Als Initiatoren bei dem Verfahren gemäß der Erfindung werden die bereits bekannten und mehrfach beschriebenen Initiatoren wie Lewis-Säuren oder Protonensäuren eingesetzt. Bevorzugt ist die Verwendung von Heteropolysäuren als Polymerisationsinitiatoren. Die allgemeine Formel der verwendeten Heteropolysäuren lautet

$H_{8-n}[A(M_{12}O_{40})]^{n-8}$. Dabei steht M für ein Metallatom der sechsten Nebengruppe des Periodischen Systems. Molybdän oder Wolfram ist besonders geeignet. Das Heteroatom A kann beispielsweise Bor, Silicium, Phosphor oder Arsen sein, deren Wertigkeit n die Zahlen 3, 4 oder 5 annehmen. Besonders vorteilhaft sind Heteropolysäuren mit Phosphor als Heteroatom. Am besten geeignet ist die Wolframatophosphorsäure $H_3[P(W_{12}O_{40})]$. Die eingesetzte Initiatormenge liegt dabei im Bereich von 0,2 bis 10 ppm, bezogen auf das Reaktionsgemisch, bevorzugt 1 bis 7 ppm. Die besten Ergebnisse sind mit einer Initiatormenge von 2 bis 5 ppm Heteropolysäure zu erzielen.

Die Polymerisation von Formaldehyd und/oder Trioxan mit bis zu 10 Mol% Comonomeren wird in inerten Medien bei Temperaturen von 61 bis 80°C durchgeführt, um ultrahoch- molekulare Polyoxymethylencopolymere zu erhalten. Der Druck bei der Polymerisationsreaktion liegt bei 1 bis 3 bar.

Die Formmasse gemäß der Erfindung kann gegebenenfalls noch bekannte, übliche Zusatzstoffe wie Stabilisatoren, Nukleierungsmittel, Antistatika, Licht- und Flammschutzmittel, Gleit- und Schmiermittel, Weichmacher, Pigmente, Farbstoffe, optische Aufheller, Verarbeitungshilfsmittel und dergleichen enthalten, deren Menge bis zu 50 Gew.%, bezogen auf die Gesamtmischung, betragen kann.

Diese Formmassen können wie die handelsüblichen Polyacetale durch Spritzguß oder Extrusion verarbeitet werden. Die Herstellung von Formkörpern kann direkt durch Spritzguß erfolgen. Die Materialien sind aber ebenso gut geeignet für die Extrusionsverarbeitung. Die endgültige Formgebung erfolgt dann durch die Bearbeitung der extrudierten Halbzeuge. Blasformverfahren wie Extrusionsblasen oder Streckblasen können zur Verarbeitung der beschriebenen Materialien ebenfalls eingesetzt werden.

Beispiele

Die in den folgenden Beispielen angegebenen Teile sind Gewichtsteile, die MFI-Werte wurden gemessen bei 190°C mit einem Auflagegewicht von 2,16 kg, wenn nicht anders angeführt.

1) 97 Teile Trioxan werden mit 3 Teilen Dioxolan in Gegenwart von 1 ppm Wolframatophosphorsäure als Initiator in einer Suspensionsflotte aus dünnflüssigem Paraffinöl bei 63°C polymerisiert. Für 20 g Rohpolymerisat werden 200g Suspensionsmittel eingesetzt. Das erhaltene Rohpolymere wird von nicht umgesetzten Monomeren und Hemiacetalendgruppen durch Erhitzen in einer Methanol-Wassermischung bei Anwesenheit von basischen Substanzen befreit, getrocknet, mit den üblichen Stabilisatoren versehen und extrudiert. Das Material hat einen Schmelzindex von 0,71 g/10 min. Die mechanischen Eigenschaften dieses Materials sind in Tab.1 im Vergleich mit handeslüblichen Produkten angegeben (V1 und V2).

Tabelle 1

|  |  | Beispiel 1 | V1 | V2 |
|---|---|---|---|---|
| MFI$_{190°C/2,16\,kg}$ | g/10 min | 0,71 | 2,5 | 7,0 |
| Kerbschlagzähigkeit | mJ/mm$^2$ | 10,2 | 6,5 | 7,0 |
| Durchstoßversuch: |  |  |  |  |
| Gesamtarbeit | J | 12,4 | 6,5 | 12,0 |
| Verformung | mm | 6,3 | 1.9 | 5,0 |

V1 = POM-Copolymer, unmodifiziert

V2 = POM Copolymer, MFI 9 g/10 min, schlagzäh modifiziert mit 20 %

      aromatischem Polyurethan.

2) 98 Teile Trioxan werden mit 2 Teilen Ethylenoxid in Gegenwart von 30 ppm Bortrifluorid als Initiator in einem kontinuierlich arbeitenden Kneter bei 75°C polymerisiert. Das erhaltene Rohpolymere wird von nicht umgesetzten Monomeren und Hemiacetalendgruppen wie in Beispiel 1 befreit und mit den üblichen Stabilisatoren versehen. Das Material hat einen Schmelzindex von 0,24 g/10 min. Die mechanischen Eigenschaften dieses Materials sind in Tab.2 im Vergleich zu den Werten von V1 und V2 angegeben.

Tabelle 2

|  | Beispiel 2 | V1 | V2 |
|---|---|---|---|
| MFI$_{190°C/2,16\,kg}$ g/10 min | 0,24 | 2,5 | 7,0 |
| Kerbschlagzähigkeit mJ/mm$^2$ | 11,80 | 6,5 | 7,0 |

3) 98 Teile Trioxan werden mit 2 Teilen Ethylenoxid in Gegenwart von 20 ppm Bortrifluorid als Initiator in einem kontinuierlich arbeitendem Extruder bei 77°C polymerisiert. Das erhaltene Rohpolymere wird von nicht umgesetzten Monomeren und Hemiacetalendgruppen wie in Beispiel 1 befreit und mit den üblichen Stabilisatoren versehen. Das Material hat einen Schmelzindex von 0,19 g/10 min. Die mechanischen Eigenschaften dieses Materials sind in Tab.3 angegeben.

Tabelle 3

|  |  | Beispiel 3 |
|---|---|---|
| MFI$_{190°C/2,16\,kg}$ | g/10 min | 0,19 |
| Kerbschlagzähigkeit | mJ/mm$^2$ | 19,5 |
| Durchstoßversuch: |  |  |
| Gesamtarbeit | J | 11,6 |
| Verformung | mm | 6,7 |

EP 0 591 828 A2

**Patentansprüche**

1. Formmasse aus linearen Polyoxymethylencopolymeren und üblichen Zusatzstoffen, dadurch gekennzeichnet, daß der Schmelzindex MFI bei 2,16 kg Auflagegewicht und 190°C Meßtemperatur ≦0,8 g/10 min beträgt.

2. Formmasse nach Anspruch 1, dadurch gekennzeichnet, daß die Polyoxymethylencopolymeren eine reduzierte spezifische Lösungsviskosität größer 2,5 dl/g gemessen in $\gamma$-Butyrolacton in einer Konzentration von 0,5 g/100 ml bei 140°C aufweisen.

3. Formmasse nach Ansprüchen 1 oder 2, dadurch gekennzeichnet, daß sie bis zu 5 Gew.% andere übliche Zusatzstoffe enthalten.

4. Formmasse nach einem oder mehreren der Ansprüche 1 bis 3, dadurch gekennzeichnet, daß
die Kerbschlagzähigkeit $a_K$, gemessen nach DIN 53453 bei 23°C, größer als 10 mJ/mm$^2$ ist,
die Schädigungsarbeit beim Durchstoßversuch nach DIN 53443, gemessen bei 23°C, größer als 7 J ist,
die Verformung beim Durchstoßtest nach DIN 53443, gemessen bei 23°C, größer als 6 mm ist und
die Gesamtarbeit beim Durchstoßtest nach DIN 53443, gemessen bei 23°C, größer ist als 11 J.

5. Formmasse nach einem oder mehreren der Ansprüche 1 bis 4, dadurch gekennzeichnet, daß der Schmelzindex MFI vorzugsweise ≦0,5 g/10 min und insbesondere ≦0,2 g/10 min ist.

6. Formmasse nach einem oder mehreren der Ansprüche 1 bis 5, dadurch gekennzeichnet, daß sie als übliche Zusatzstoffe Stabilisatoren, Nukleierungsmittel, Antistatika, Licht- und Flammschutzmittel, Gleit- und Schmiermittel, Weichmacher, Pigmente, Farbstoffe, optische Aufheller, Verarbeitungshilfsmittel in Mengen bis zu 50 Gew.-% enthält.

7. Verfahren zur Herstellung von Formmassen durch Polymerisation von Formaldehyd und/oder Trioxan mit bis zu 10 Mol% von Comonomeren, dadurch gekennzeichnet, daß als Initiatoren Lewis-Säuren oder Protonensäuren verwendet werden.

8. Verfahren nach Anspruch 7, dadurch gekennzeichnet, daß als Initiator Heteropolysäuren, insbesondere Wolframatophosphorsäure eingesetzt wird.

9. Verfahren nach Ansprüchen 7 oder 8, dadurch gekennzeichnet, daß als Comonomer ein zyklisches Acetal verwendet wird, vorzugsweise Dioxolan oder Butandiolformal und/oder ein zyklischer Ether.

10. Verfahren nach einem odere mehreren der Ansprüche 7 bis 9, dadurch gekennzeichnet, daß die Polymerisation bei einer Temperatur von 61°C bis 80°C, bei einem Druck von 1 bis 3 bar durchgeführt wird.

11. Verfahren zur Herstellung von Formmassen nach einem der Ansprüche 7 bis 10, dadurch gekennzeichnet, daß während oder nach der Polymerisation den Polyoxymethylencopolymeren Hilfsstoffe und/oder übliche Additive und Stabilisatoren zugesetzt werden.

12. Formkörper, hergestellt aus Formmassen gemäß einem oder mehreren der Ansprüche 1 bis 6.

5